# EUROPÄISCHE PATENTSCHRIFT

(11) **EP 3 165 883 B1**
(45) Veröffentlichungstag und Bekanntmachung des Hinweises auf die Patenterteilung: **08.08.2018**
(21) Anmeldenummer: 15193194.6
(22) Anmeldetag: 05.11.2015
(51) Int. Cl.: G01F 23/284, G01S 7/03, G01S 13/88, H01Q 13/02, H01Q 19/13, H01Q 19/17, H01Q 21/28, H01Q 25/00, H01Q 5/40

(54) **FÜLLSTANDRADARSENSOR MIT ABSCHIRMUNG**
FILL LEVEL RADAR SENSOR WITH SHIELDING
CAPTEUR RADAR DE NIVEAU DE REMPLISSAGE DOTE DE BLINDAGE

(43) Veröffentlichungstag der Anmeldung: 10.05.2017
(73) Patentinhaber: VEGA Grieshaber KG, 77709 Wolfach (DE)
(72) Erfinder: SKOWAISA, Jürgen, 77761 Schiltach (DE); HENGSTLER, Clemens, 77716 Haslach (DE)
(74) Vertreter: Maiwald Patent- und Rechtsanwaltsgesellschaft mbH

(56) Entgegenhaltungen:
- EP-A2- 1 764 591
- WO-A1-2013/004313
- CN-U- 204 188 224
- DE-A1-102005 049 242
- DE-A1-102007 061 571
- US-A- 5 614 831
- US-B1- 6 325 391

## Beschreibung

### Gebiet der Erfindung

Die Erfindung betrifft die Füllstandmessung. Insbesondere betrifft die Erfindung einen Füllstandradarsensor zur außenseitigen Anbringung an einer geschlossenen Behälterdecke sowie einen Behälter mit einer Decke, an der ein entsprechender Füllstandradarsensor angebracht ist.

### Hintergrund

Behälter, in welchen ein Füllgut gespeichert ist und deren Füllstand bestimmt werden soll, weisen im Regelfall eine Behälterdecke, beispielsweise in Form eines Behälterdeckels auf, welche mit einer Öffnung versehen ist, durch die der Sensor hindurchgeführt wird. Im Fall von Kunststoffbehälterdecken ist es möglich, den Füllstandradarsensor außen an der Behälterdecke anzuordnen und durch die Decke hindurch zu messen. Beispielsweise kann hierfür ein Fenster in der Behälterdecke vorgesehen sein. In diesem Fall wird die Messung von der Behälterdecke beeinflusst, was sich negativ auf das Messergebnis auswirken kann, insbesondere, wenn Schmutz an der Behälterdecke anhaftet.

DE 10 2005 049 242 A1 betrifft eine Parabolantenne mit konischer Streuscheibe für Füllstandradar. Die Parabolantenne umfasst einen Parabolspiegel, einen Erreger und eine Streuscheibe, wobei die Streuscheibe zum seitlichen Abführen störender elektromagnetischer Wellen dient, welche andernfalls vom Erreger aufgenommen werden würden.

US 5,614,831 A betrifft ein Verfahren und eine Vorrichtung zum Messen eines Füllstands in einem Behälter mit einer schwimmenden Behälterdecke. Über einen Radarsensor, welcher außenseitig an einem Behälter montiert ist, wird ein Radarsignal auf einen auf der schwimmenden Behälterdecke angeordneten Empfänger/Sender gerichtet, wobei über Löcher und eine Rohrleitung das Radarsignal durch die Behälterdecke bis auf das Füllgut geleitet werden und so der Füllstand bestimmt werden kann. EP 1 764 591 A2 betrifft einen Füllstandradarsensor zur außenseitigen Anbringung an einer geschlossenen Wandung eines Behälters, bei dem ein Sendesignal durch die Wandung des Behälters in Richtung einer Füllgutoberfläche gesendet wird und die reflektierten Signale empfangen und ausgewertet werden..

### Zusammenfassung der Erfindung

Es ist eine Aufgabe der Erfindung, die Messung eines Füllstands durch eine Behälterdecke hindurch zu verbessern.

Diese Aufgabe wird durch die Merkmale des unabhängigen Patentanspruchs gelöst. Weiterbildungen ergeben sich aus den Unteransprüchen und der folgenden Beschreibung.

Ein erster Aspekt der Erfindung betrifft einen Füllstandradarsensor zur außenseitigen Anbringung an einer geschlossenen Decke eines Behälters. Die Behälterdecke ist hierbei derjenige Teil des Behälters, der dem Füllgut entgegengesetzt angeordnet ist, sich also bei ordnungsgemäßem Betrieb im oberen Bereich des Behälters befindet.

Der Füllstandradarsensor weist eine Sendeantennenanordnung zum Senden eines Sendesignals in Richtung der Füllgutoberfläche eines in dem Behälter gespeicherten Füllguts auf. Weiterhin ist eine Empfangsantennenanordnung vorgesehen, die dem Empfangen eines Empfangssignals dient, bei dem es sich um das an der Füllgutoberfläche reflektierte Sendesignal bzw. des an der Füllgutoberfläche reflektierten Anteils des Sendesignals handelt.

Der Sensor weist darüber hinaus eine Abschirmung auf, die dem Abschirmen von denjenigen Signalanteilen des Sendesignals dient, welche an der Decke des Behälters, also beispielsweise an dessen Außenfläche oder auch an dessen Innenfläche, reflektiert wurden. "Abschirmen" bedeutet in diesem Zusammenhang ein Absorbieren und/oder Reflektieren dieser Signalanteile. Somit kann ein Empfangen dieser Signalanteile von der Empfangsantennenanordnung verhindert werden.

Somit blockiert die Abschirmung den Signalpfad zwischen den Orten, an denen das Sendesignal die Oberfläche des Behälterdeckels erreicht und der Empfangsantennenanordnung.
Der Füllstandradarsensor kann demnach für die Messung durch eine Kunststoffbehälterdecke optimiert sein. Insbesondere ist es möglich, störende Auswirkungen bei der Messung durch die Behälterdecke zu verringern oder sogar ganz zu eliminieren. Für den Anwender ergeben sich zahlreiche Vorteile, beispielsweise eine einfachere Inbetriebnahme des Sensors, keine umständliche, elektronische Störsignalausblendung, die Verringerung des Totbereiches des Sensors oder, anders gesagt, eine Vergrößerung des Messbereichs (Nutzbereich). Die Sendeantennenanordnung und die Empfangsantennenanordnung sind erfindungsgemäß getrennt voneinander angeordnet. Beispielsweise sind sie hintereinander und/oder versetzt zueinander angeordnet.

Gemäß einer Ausführungsform der Erfindung weist die Sendeantennenanordnung eine Hornantenne zur Fokussierung des Sendesignals in Richtung Füllgut auf. Alternativ oder zusätzlich kann die Empfangsantennenanordnung eine Hornantenne aufweisen.
Gemäß einer Ausführungsform der Erfindung weist die Empfangsantennenanordnung eine Empfangselementanordnung und eine Parabolantenne zur Fokussierung des Empfangssignals auf die Empfangselementanordnung auf. Alternativ oder zusätzlich kann auch die Sendeantennenanordnung eine Parabolantenne aufweisen.
Wenn hier und im Folgenden von einer Empfangselementanordnung oder einer Sendeelementanordnung bzw. Strahlerelementanordnung die Rede ist, fallen hierunter arrayartige Anordnungen von planaren Strahlerelementen oder auch ein einzelnes planares Strahlerelement.

Diese Elemente können beispielsweise auf der Ober- und/oder Unterseite einer Platine bzw. Leiterplatte angebracht sein.

Gemäß einer weiteren Ausführungsform der Erfindung ist die Abschirmung ringförmig ausgeführt. Beispielsweise ist die Abschirmung an der Öffnung des Antennenhorns angebracht, also in deren unterem Ende, welches in Richtung Füllgutoberfläche weist.

Auch kann die Abschirmung quadratisch mit einer Aussparung zur Aufnahme der Empfangselementanordnung ausgeführt sein. Alternativ kann die Abschirmung sechseckig mit einer Aussparung zur Aufnahme der Empfangselementanordnung ausgeführt sein.

Insbesondere kann die Sendeantennenanordnung eine Strahlerelementanordnung aufweisen, welche in derselben Ebene angeordnet ist wie die Abschirmung und welche in einer Aussparung der Abschirmung angeordnet ist.

Beispielsweise sind sowohl die Sendeelementanordnung als auch die Abschirmung auf der unteren, dem Füllgut zugewandten Oberfläche einer Platine angebracht.

Die untere, dem Füllgut zugewandte Seite der Platine bzw. Leiterplatte kann auch als deren Vorderseite bezeichnet werden. Auf deren Rückseite kann die Empfangselementanordnung angeordnet sein.

Gemäß einer weiteren Ausführungsform der Erfindung ist die Abschirmung modular und zur reversiblen Anbringung an den Füllstandradarsensor, beispielsweise am Antennenhorn, ausgeführt.

Auf diese Weise ist eine Nachrüstbarkeit gegeben. Insbesondere kann die Abschirmung durch eine andere, anders dimensionierte Abschirmung ausgetauscht werden. Dies kann beispielsweise dann von Vorteil sein, wenn sich die Dicke des Behälterdeckels stark ändert.

Ein weiterer Aspekt der Erfindung betrifft einen Behälter mit einer Decke, in der ein oben und im Folgenden beschriebener Füllstandradarsensor angebracht ist.

Im Folgenden werden unter Bezugnahme auf die Figuren Ausführungsformen der Erfindung beschrieben. Werden in der folgenden Figurenbezeichnung die selben Bezugszeichen verwendet, so bezeichnen diese gleiche oder ähnliche Elemente.

### Kurze Beschreibung der Figuren

Fig. 1 zeigt einen Behälter mit einer Decke, an der ein Füllstandradarsensor gemäß einem Ausführungsbeispiel der Erfindung angebracht ist.
Fig. 2 zeigt eine Anordnung von einem Sendeelement und mehreren Empfangselementen gemäß einem Ausführungsbeispiel der Erfindung.
Fig. 3 zeigt eine Anordnung von einem Sendeelement und mehreren Empfangselementen gemäß einem weiteren Ausführungsbeispiel der Erfindung.
Fig. 4 zeigt eine Anordnung von einem Sendeelement und einem Empfangselement gemäß einem weiteren Ausführungsbeispiel der Erfindung.
Fig. 5 zeigt eine Anordnung von einem Sendeelement und mehreren Empfangselementen gemäß einem weiteren Ausführungsbeispiel der Erfindung.
Fig. 6 zeigt eine Anordnung von einem Sendeelement und mehreren Empfangselementen gemäß einem weiteren Ausführungsbeispiel der Erfindung.
Fig. 7 zeigt eine Anordnung von Sendeelementen und Empfangselementen gemäß einem weiteren Ausführungsbeispiel der Erfindung.
Fig. 8 zeigt mehrere Ausführungsbeispiele einer Abschirmung.
Fig. 9 zeigt einen Füllstandradarsensor gemäß einem Ausführungsbeispiel der Erfindung.
Fig. 10 zeigt einen Füllstandradarsensor gemäß einem weiteren Ausführungsbeispiel der Erfindung.
Fig. 11 zeigt einen Füllstandradarsensor gemäß einem weiteren Ausführungsbeispiel der Erfindung.

### Detaillierte Beschreibung von Ausführungsbeispielen

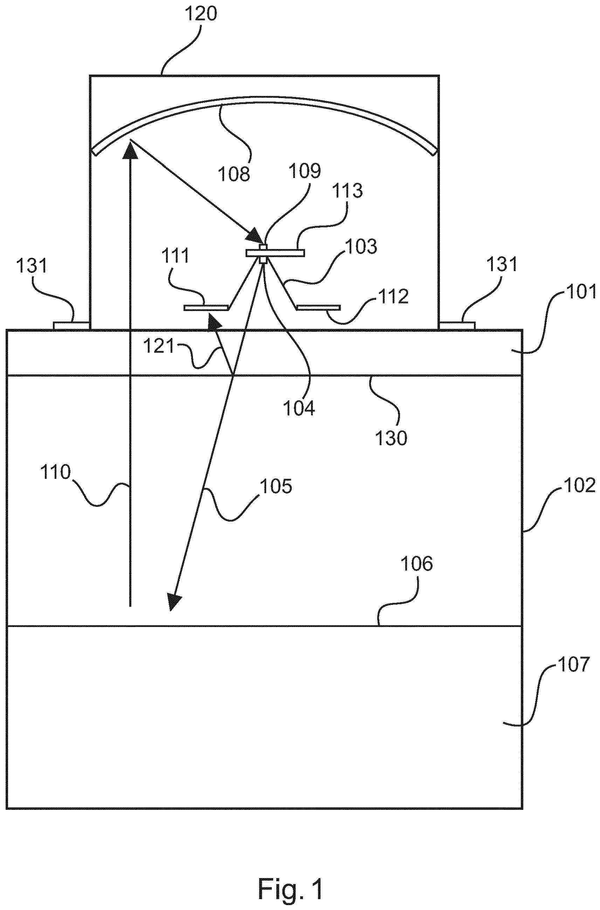

Fig. 1 zeigt einen Füllstandradarsensor gemäß einem Ausführungsbeispiel der Erfindung. Der Sensor weist ein Gehäuse 120 auf, welches außen an der Decke 101 des Behälters 102 befestigt ist. Der Füllstandradarsensor weist eine Sendeantennenanordnung auf, welche aus einem Send- bzw. Strahlerelement 104 oder, alternativ, einem Array aus einzelnen Strahlerelementen 104, und einem Antennenhorn 103 besteht. Darüber hinaus ist eine Empfangsantennenanordnung vorgesehen, welche aus einer Empfangselementanordnung 109 (auch hier kann es sich beispielsweise um ein einzelnes oder ein Array aus mehreren Empfangselementen handeln) und einer Parabolantenne 108.

Das/die Sendeelemente 104 und das/die Empfangselemente 109 sind jeweils auf der Unterseite bzw. Oberseite einer Leiterplatte 113 angebracht. Die Hornantenne 103 kann beispielsweise mit der Platine 113 verklebt oder anderweitig daran fixiert sein.

In dem Behälter 102 ist ein Füllgut 107 gespeichert und der Behälter 102 ist durch die Decke 101 verschlossen. Die Decke 101 weist ein Fenster auf, welches beispielsweise aus Kunststoff, Glas oder Keramik ausgeführt sein kann. Kunststoffdecken werden insbesondere bei sog. IBC-Containern (IBC: Intermediate Bulk Container) und GFK-Tanks verwendet.

Von der Sendeantennenanordnung 103, 104 wird ein Sendesignal 105 in Richtung der Füllgutoberfläche 106 abgestrahlt. Dieses Signal wird in Regelfall auch auf der oberen und unteren Oberfläche 130 des Fensters 101 reflektiert. Der reflektierte Signalanteil 121 wird von der Abschirmung 111, 112 reflektiert und/oder absorbiert, sodass er die Parabolantenne 108 nicht erreichen kann. Der an der Füllgutoberfläche 106 reflektierte Sendesignalanteil 110 erreicht die Parabolantenne und wird von dieser auf die Empfangselementanordnung 109 fokussiert.

Der Füllstandradarsensor ist somit hinsichtlich des Aufbaus seines Antennensystems auf die Messung durch die Behälterdecke 101 optimiert. Somit können die störenden Auswirkungen bei der Messung durch die Behälterdecke verringert oder sogar ganz eliminiert werden.

Aufgrund der getrennten Anordnung von Sende- und Empfangsantennenanordnung und dem Vorsehen einer Abschirmung kann vermieden werden, dass direkte Reflexionen des Sendesignals an der Behälterdecke 101 die Empfangsantennenanordnung erreichen. Insbesondere können Sende- und Empfangssignale sauber voneinander getrennt werden. Auch wird das sog. Klingeln auf der Echokurve, bei dem es sich um störende Effekte im Nahbereich der Antenne handelt, reduziert oder ganz vermieden.

Durch die beschriebene Anordnung der Antenneneinrichtungen versetzt und/oder hintereinander reduziert sich der Mindestabstand zwischen Füllgut und Sensor, unterhalb dessen eine Füllstandbestimmung nicht mehr möglich ist.

Beispielsweise verwendet der Füllstandradarsensor eine Sendesignalfrequenz, deren Wellenlänge mindestens ein Faktor 2 oder 4 größer ist als die Dicke des Fensters bzw. der Behälterdecke. Bei einer Frequenz von 26 GHz würde dies einer Dicke der Behälterdecke zwischen 2 bis 5 mm entsprechen.

Insbesondere kann die Geometrie der Abschirmung auch an die Dicke der Behälterdecke angepasst sein. So kann beispielsweise vorgesehen sein, dass die Abschirmung modular erweiterbar oder austauschbar ausgeführt ist. Wird beispielsweise der Füllstandradarsensor auf einem verhältnismäßig dicke Behälterdecke angebracht, wird eine andere Abschirmung verwendet, als bei der Anbringung des Sensors auf einer verhältnismäßig dünnen Behälterdecke. Ziel der Abschirmung ist es, die direkten Reflexionen an der Behälterdecke zu absorbieren oder wegzustreuen, sodass sie nicht die Empfangsantennenanordnung erreichen können.

Bei der Messung durch ein Fenster 101 kann sich das Sendesignal auch im Fenster ausbreiten. Dieser Effekt verstärkt sich bei Anhaftungen und Kondensat. Wenn aber das Fenster dünner als die Hälfte der Wellenlänge des Sendesignals ist, kann sich die Welle nicht im Fenster in Längsrichtung des Fensters ausbreiten. Somit wird eine störende Reflexion verhindert.

Die Sende- und Empfangselementanordnungen, bei denen es sich um beispielsweise sog. Sende- und Empfangspatches in Form von flächigen Strahlerelementen handelt, können auf einer Platine/einem Substrat angeordnet werden. Hierdurch können Herstellungskosten reduziert werden und es kann ein einfacher Aufbau des getrennten Sende- und Empfangsblocks gewährleistet werden.

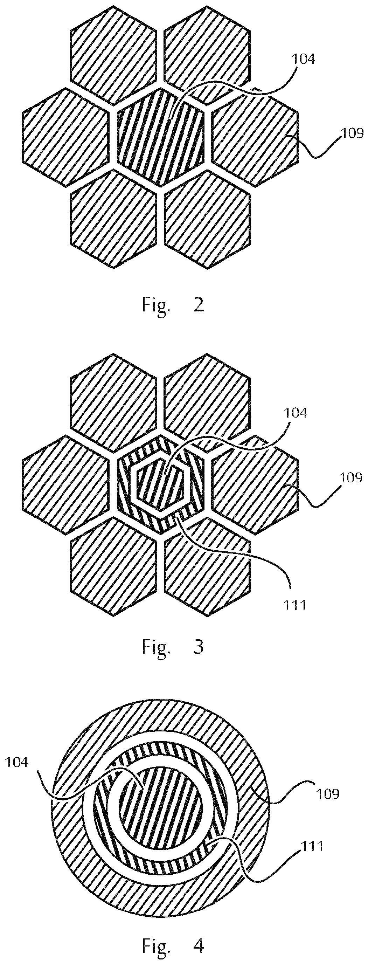

Fig. 2 zeigt eine Anordnung von einem Sendeelement und sechs Empfangselementen. Alle Elemente sind sechseckig ausgeführt und berühren einander nicht. Zwischen dem Sendeelement 104 und den Empfangselementen 109 kann eine Abschirmung angeordnet sein. Ein Beispiel für eine solche Abschirmung 111 ist in Fig. 3 gezeigt. Auch die Abschirmung 111 ist sechseckig und weist eine sechseckige Aussparung auf, in welcher das Sendeelement 104 angeordnet ist. Auch die Abschirmung berührt die einzelnen Sende- und Empfangselemente nicht.

Insbesondere können auch weitere Empfangselemente vorgesehen sein.

Fig. 4 zeigt ein weiteres Ausführungsbeispiel einer Anordnung aus Sende- und Empfangselementen 104, 109. In diesem Fall ist das Sendeelement 104 kreisrund ausgeführt und das Empfangselement 109 kreisringförmig. Auch die Abschirmung, welche zwischen dem Sendeelement und dem Empfangselement angeordnet ist, ist kreisringförmig. An dieser Stelle sei darauf hingewiesen, dass in diesem und in anderen Ausführungsbeispielen die Sendeelemente und die Empfangselemente miteinander vertauscht werden können. In anderen Worten kann das kreisförmige Element 104 auch als Empfangselement dienen und entsprechend das ringförmige Element 109 als Sendeelement.

Die einzelnen Sende- und Empfangselemente müssen nicht auf derselben Ebene liegen. Beispielsweise kann es bei der Anordnung gemäß Fig. 4 so sein, dass das kreisrunde Element 104 in einem Antennenhorn angeordnet ist, wie dies in Fig. 1 dargestellt ist, die Abschirmung 111 um das Antennenhorn herumgeführt ist (siehe ebenfalls Fig. 1), sich das Empfangselement 109 aber auf einer anderen Ebene befindet, vom Füllgut aus gesehen hinter der Abschirmung 111.

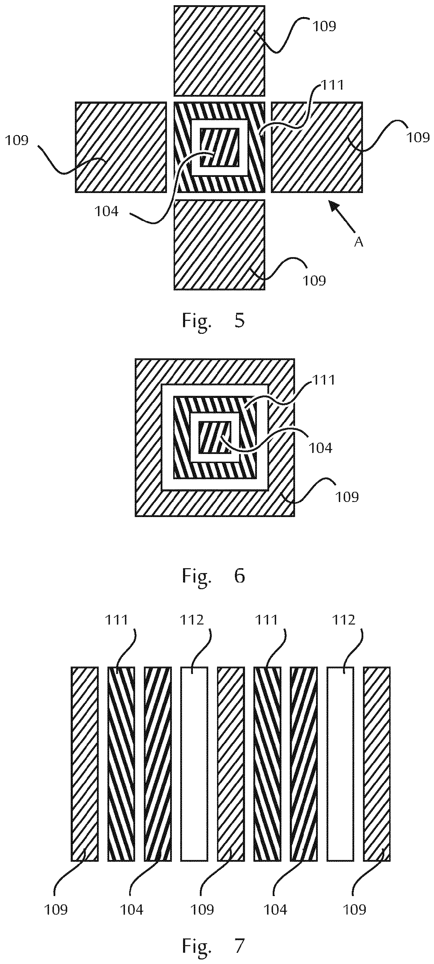

Fig. 5 zeigt eine rechteckige Ausführung einzelner Sende- und Empfangselemente 104, 109. Das Sendeelement 104 befindet sich im Zentrum und ist quadratisch ausgeführt. Darum ist die Abschirmung 111 angebracht, bei der es sich um ein Quadrat mit einer quadratischen Aussparung handelt, in welcher das Sendeelement 104 angeordnet ist. An die Abschirmung 111 schließt sich auf jeder Seite ein Empfangselement 109 an. Auch hier können noch weitere Empfangselemente vorgesehen sein.

Fig. 6 zeigt eine weitere Anordnung von Sende- und Empfangselementen 104, 109. Im Vergleich zur Fig. 5 ist in diesem Ausführungsbeispiel das Empfangselement 109 quadratisch ausgeführt und weist eine quadratische Aussparung auf, in welcher sich das Sendeelement 104 und die Abschirmung 111 befinden. Die Anordnung der drei Elemente ist konzentrisch.

Fig. 7 zeigt eine streifenförmige Anordnung einzelner Sende- und Empfangselemente. Links und rechts von jedem Sendeelementestreifen 104 befindet sich eine streifenförmige Abschirmung 111, 112 und seitlich davon jeweils ein Empfangselementestreifen 109. Die Sequenz 109, 111, 104, 112, 109 kann beliebig oft wiederholt werden.

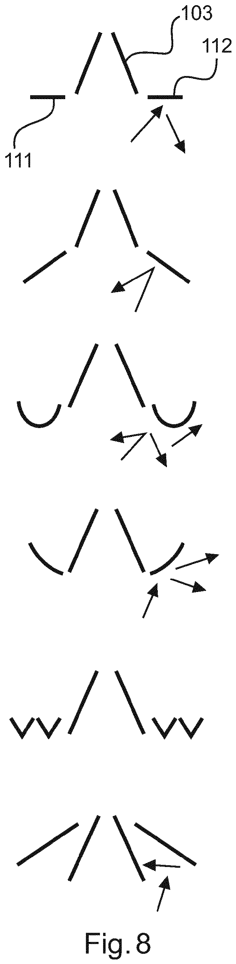

Fig. 8 zeigt weitere Beispiele für Abschirmungen 111, 112, welche in diesem Ausführungsbeispiel mit einer Hornantenne 103 kombiniert werden. Die Abschirmungen sind ringförmig um den Endbereich des Antennenhorns 103 angeordnet.

Dieser Ring kann beispielsweise flach ausgeführt sein, sodass er in der Ebene senkrecht zur Hauptabstrahlrichtung des Antennenhorns 103 liegt. Er kann aber auch konusartig ausgeführt sein (siehe zweites Beispiel) oder eine gebogene Oberfläche aufweisen (siehe Beispiele 3 und 4). Auch eine dreieckige oder gezackte Oberfläche ist möglich (siehe Ausführungsbeispiel 5). Auch ist eine schräge Abschirmung hinter der Antenne möglich (siehe Ausführungsbeispiel 6).

Im Falle des zweiten Ausführungsbeispiels ergibt sich eine Reflexion der abzuschirmenden Signalanteile nach innen, beim ersten Ausführungsbeispiel nach außen und bei den Ausführungsbeispielen 3 bis 5 könnte man von einer diffusen Reflexion sprechen, da eine Zerstreuung der störenden Signalanteile erfolgt.

Als Materialien für die Abschirmung kommen elektrisch leitende Materialien in Betracht, welche gute Reflexionseigenschaften aufweisen. Beispiele hierfür sind Metalle, elektrisch leitfähige Kunststoffe und beschichtete Kunststoffe. Es kommen aber auch Absorbermaterialien in Betracht, welche die Reflexion der störenden Signalanteile verringern. Beispiele hierfür sind leitfähige Schaumstoffe, Kunststoffe, Gummi, Dämpfungsmatten oder Kohlefaser.

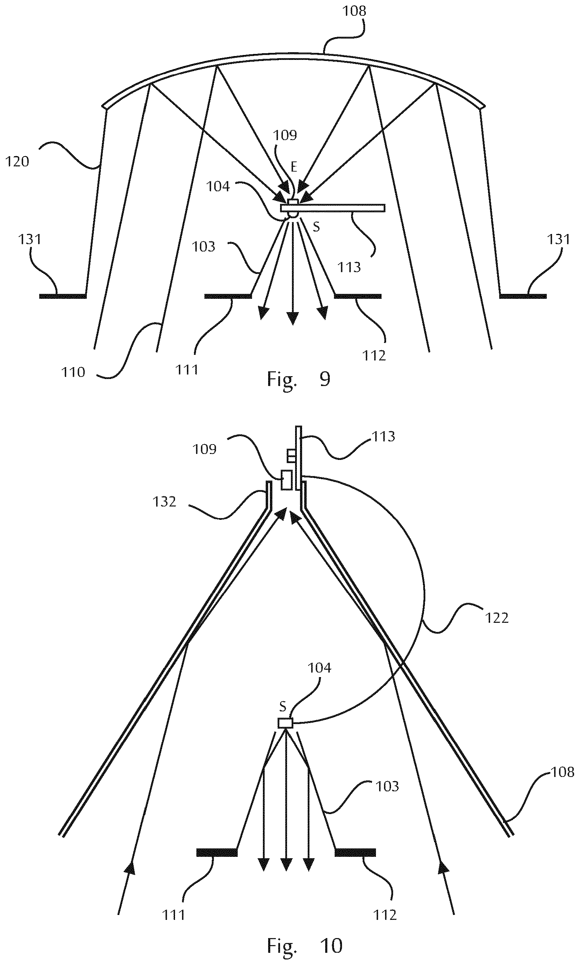

Fig. 9 zeigt ein weiteres Ausführungsbeispiel des Füllstandradarsensor. Die gewinkelten Bereiche 131 des Gehäuses 120 dienen der Anbringung des Sensors an der Behälterdecke. Im Wesentlichen entspricht dieses Ausführungsbeispiel dem der Fig. 1. Jedoch bildet die Parabolantenne 108 beidseitig die Oberseite des Gehäuses des Sensors aus.

Fig. 10 zeigt ein weiteres Ausführungsbeispiel eines Füllstandradarsensors, welcher zwei konzentrisch angeordnete Hornantennen 103, 108 aufweist. Die Sendeantennenanordnung besteht in diesem Ausführungsbeispiel aus einem oder mehreren Sendeelementen 104, welche oberhalb oder im Antennenhorn 103 angeordnet sind. Dies entspricht im Wesentlichen der Anordnung der Figuren 1 und 9. Allerdings weist auch die Empfangsantennenanordnung ein Antennenhorn 108 auf, welches über das Antennenhorn 103 der Sendeantennenanordnung gestülpt ist. An das Antennenhorn 108 schließt sich ein Hohlleiter 132 an, an dessen oberem Ende das Empfangselement 109 positioniert ist, welches sich auf der Platine 113 der Empfangselektronik befindet.

Das Sendeantennenhorn 103 befindet sich in diesem Ausführungsbeispiel innerhalb des Empfangsantennenhorns 108. Das Sendeelement 104 ist über ein Hochfrequenzkabel 122 mit der Elektronik auf der Leiterplatte 113 verbunden.

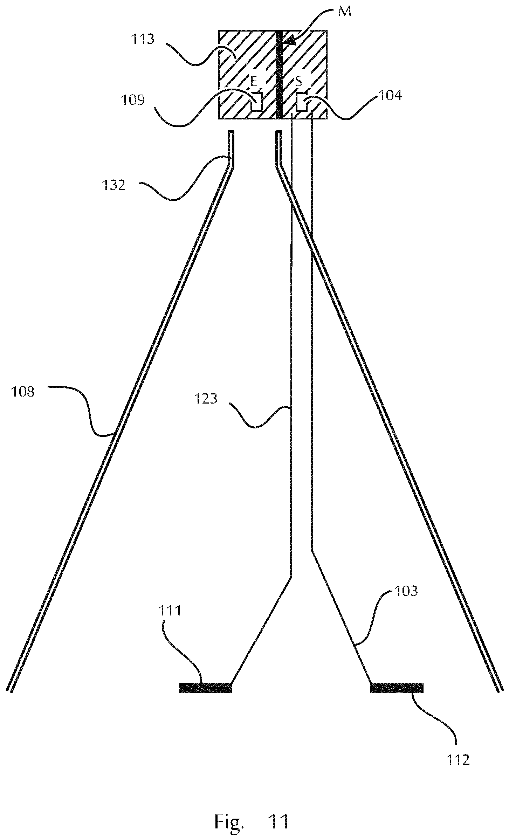

Fig. 11 zeigt ein weiteres Ausführungsbeispiel für ein Füllstandradarsensor, bei dem im Gegensatz zur Fig. 10, die beiden Hornantennen 103, 108 exzentrisch angeordnet sind. Das Sendeelement 104 befindet sich auch nicht am Ende oder innerhalb des Sendeantennenhorns 103, sondern weiter oberhalb. Das Sendeantennenhorn 103 ist an einen Hohlleiter 123 angeschlossen, der das Antennenhorn 103 mit dem Sendeelement 104 verbindet.

Die Sende- und Empfangselemente 104, 109 befinden sich beispielsweise auf derselben Leiterplatte 113, welche auch die Signalerzeugungs- und Auswerteelektronik trägt. Das Empfangselement 109 ist, ebenso wie im Ausführungsbeispiel der Fig. 10, am Ende eines Hohlleiters 132 angeordnet, der vor dem Empfangsantennenhorn 108 angebracht ist.

Alternativ zum Sendehohlleiter 123 kann auch, wie im Ausführungsbeispiel der Fig. 10, ein Kabel 122 vorgesehen sein. In diesem Fall befindet sich das Sendeelement 104 direkt oberhalb oder im Antennenhorn 103 (siehe Fig. 10).

Neben konischen Hornantennen und Parabolantennen können auch Patchantennen, Arrayantennen, Rechteckhornantennen und Linsenantennen verwendet werden. Maßgeblich ist, dass getrennte Sende- und Empfangsantennenanordnungen vorgesehen sind und das an der Behälterdecke reflektierte Sendesignal von einer Abschirmung absorbiert oder reflektiert bzw. gestreut wird, um zu vermeiden, dass diese reflektierten Signalanteile die Empfangsantennenanordnung erreichen.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Füllstandradarsensor zur außenseitigen Anbringung an einer geschlossenen Decke (101) eines Behälters (102), aufweisend:
eine Sendeantennenanordnung (103, 104) zum Senden eines Sendesignals (105) in Richtung der Füllgutoberfläche (106) eines in dem Behälter gespeicherten Füllgutes (107);
eine Empfangsantennenanordnung (108, 109) zum Empfangen eines Empfangssignals (110), bei dem es sich um das an der Füllgutoberfläche reflektierte Sendesignal handelt; wobei die Sendeantennenanordnung (103, 104) und die Empfangsantennenanordnung (108, 109) getrennt voneinander angeordnet sind;
**gekennzeichnet durch**
eine Abschirmung (111, 112) zum Abschirmen von Signalanteilen (121) des Sendesignals, welche an der Decke des Behälters reflektiert wurden, so dass ein Empfang dieser Signalanteile von der Empfangsantennenanordnung verhindert wird.

2. Füllstandradarsensor nach Anspruch 1, wobei die Sendeantennenanordnung (103, 104) und die Empfangsantennenanordnung (108, 109) hintereinander und/oder versetzt zueinander angeordnet sind.

3. Füllstandradarsensor nach einem der vorhergehenden Ansprüche,
wobei die Sendeantennenanordnung (103, 104) eine Hornantenne (103) zur Fokussierung des Sendesignals (104) in Richtung Füllgut (107) aufweist.

4. Füllstandradarsensor nach einem der vorhergehenden Ansprüche,
wobei die Empfangsantennenanordnung (108, 109) eine Empfangselementanordnung (109) und eine Parabolantenne (108) zur Fokussierung des Empfangssignals (110) auf die Empfangselementanordnung aufweist.

5. Füllstandradarsensor nach einem der vorhergehenden Ansprüche,
wobei die Abschirmung (111, 112) ringförmig ausgeführt ist.

6. Füllstandradarsensor nach Anspruch 4 oder 5, wobei die Abschirmung (111, 112) an der Öffnung der Parabolantenne (108) angebracht ist.

7. Füllstandradarsensor nach Anspruch 5, wobei die Abschirmung (111, 112) eine Aussparung zur Aufnahme der Empfangselementanordnung (109) aufweist.

8. Füllstandradarsensor nach einem der Ansprüche 1 bis 4, wobei die Abschirmung (111, 112) quadratisch mit einer Aussparung zur Aufnahme der Empfangselementanordnung (109) ausgeführt ist.

9. Füllstandradarsensor nach einem der Ansprüche 1 bis 4, wobei die Abschirmung (111, 112) sechseckig mit einer Aussparung zur Aufnahme der Empfangselementanordnung (109) ausgeführt ist.

10. Füllstandradarsensor nach einem der vorhergehenden Ansprüche,
wobei die Sendeantennenanordnung (103, 104) eine Strahlerelementanordnung (104) aufweist, welche in derselben Ebene angeordnet ist wie die Abschirmung (111, 112) und welche in einer Aussparung der Abschirmung angeordnet ist.

11. Füllstandradarsensor nach einem der vorhergehenden Ansprüche, weiter aufweisend:
eine Leiterplatte (113), auf dessen Vorderseite (114), die dem Füllgut zugewandt ist, die Strahlerelementanordnung (104) der Sendeantennenanordnung (103, 104), und auf dessen Rückseite (115) die Empfangselementanordnung (109) der Empfangsantennenanordnung (108, 109) angeordnet ist.

12. Füllstandradarsensor nach einem der vorhergehenden Ansprüche,
wobei die Abschirmung (111, 112) modular erweiterbar oder austauschbar ausgeführt ist; und
wobei die Abschirmung (111, 112) zur reversiblen Anbringung an dem Füllstandradarsensor ausgeführt ist.

13. Behälter (102) mit einer Decke (101), an der ein Füllstandradarsensor nach einem der Ansprüche 1 bis 12 angebracht ist.

## Claims

1. A fill level radar sensor for external mounting on a closed ceiling (101) of a container (102), comprising:
a transmitting antenna arrangement (103, 104) for transmitting a transmission signal (105) in direction of a surface (106) of a filling material (107) stored in the container;
a receiving antenna arrangement (108, 109) for receiving a receiving signal (110), which is the transmission signal reflected at the surface (106) of the filling material;
wherein the transmitting antenna arrangement (103, 104) and the receiving antenna arrangement (108, 109) are spaced apart from each other,
**characterized by**
a shield (111, 112) for shielding signal portions (121) of the transmission signal reflected by the ceiling of the container so as to prevent reception of these signal portions by the receiving antenna arrangement.

2. The fill level radar sensor according to claim 1,
wherein the transmitting antenna arrangement (103, 104) and the receiving antenna arrangement (108, 109) are arranged behind each other and/or offset from one another.

3. The fill level radar sensor according to any one of the preceding claims,
wherein the transmitting antenna arrangement (103, 104) comprises a horn antenna (103) for focusing the transmission signal in the direction of the filling material (107).

4. The fill level radar sensor according to any one of the preceding claims,
wherein the receiving antenna arrangement (108, 109) comprises a receiving element arrangement (109) and a parabolic antenna (108) for focusing the receiving signal (110) on the receiving element arrangement.

5. The fill level radar sensor according to any one of the preceding claims,
wherein the shield (111, 112) is designed annular.

6. The fill level radar sensor according to claim 4 or 5,
wherein the shield (111, 112) is attached to the opening of the parabolic antenna (108).

7. The fill level radar sensor according to claim 5,
wherein the shield (111, 112) comprises a recess for receiving the receiving element arrangement (109).

8. The fill level radar sensor according to any of claims 1 to 4,
wherein the shield (111, 112) is designed squared with a recess for receiving the receiving element arrangement (109).

9. The fill level radar sensor according to any of claims 1 to 4,
wherein the shield (111, 112) is designed hexagonal with a recess for receiving the receiving element arrangement (109).

10. The fill level radar sensor according to any one of the preceding claims,
wherein the transmitting antenna arrangement (103, 104) comprises a radiating element arrangement (104) arranged in the same plane as the shield (111, 112) and which is arranged in a recess of the shield.

11. The fill level radar sensor according to any one of the preceding claims, further comprising:
a printed circuit board (113), wherein the radiating element arrangement (104) of the transmitting antenna arrangement (103, 104) is arranged on the front side (114) of the printed circuit boards, which faces the filling material, and the receiving element arrangement (109) of the receiving antenna arrangement (108, 109) is arranged on the back side (115) of the printed circuit board.

12. The fill level radar sensor according to any one of the preceding claims,
wherein the shield (111, 112) is designed modularly expandable or interchangeable; and
wherein the shield (111, 112) is designed for reversibly attaching the shield to the fill level radar sensor.

13. A container (102) with a ceiling (101) on which a fill level radar sensor according to any one of the claims 1 to 12 is arranged.

## Revendications

1. Capteur radar de niveau de remplissage destiné à être monté sur le côté extérieur d'un couvercle fermé (101) d'un conteneur (102), comportant :
un système d'antennes d'émission (103, 104) pour envoyer un signal d'émission (105) en direction de la surface (106) d'un matériau de remplissage (107) stocké dans le conteneur,
un système d'antennes de réception (108, 109) pour recevoir un signal de réception (110), ce signal de réception étant le signal d'émission réfléchi par la surface du matériau de remplissage,
dans lequel le système d'antennes d'émission (103, 104) et le système d'antennes de réception (108, 109) sont agencés séparément l'un de l'autre,
**caractérisé par**
un blindage (111, 112) destiné à protéger des composantes de signal (121) du signal d'émission qui ont été réfléchies sur le couvercle du conteneur, de sorte qu'une réception de ces composantes de signal par le système d'antennes de réception est empêchée.

2. Capteur radar de niveau de remplissage selon la revendication 1,
dans lequel le système d'antennes d'émission (103, 104) et le système d'antennes de réception (108, 109) sont agencés l'un derrière l'autre et/ou décalés l'un par rapport à l'autre.

3. Capteur radar de niveau de remplissage selon l'une des revendications précédentes,
dans lequel le système d'antennes d'émission (103, 104) comporte une antenne à cornet (103) pour focaliser le signal d'émission (104) en direction du matériau de remplissage (107).

4. Capteur radar de niveau de remplissage selon l'une des revendications précédentes,
dans lequel le système d'antennes de réception (108, 109) comporte un système d'élément de réception (109) et une antenne parabolique (108) pour focaliser le signal d'émission (110) sur le système d'élément de réception.

5. Capteur radar de niveau de remplissage selon l'une des revendications précédentes,
dans lequel le blindage (111, 112) est réalisé de manière annulaire.

6. Capteur radar de niveau de remplissage selon la revendication 4 ou 5,
dans lequel le blindage (111, 112) est monté sur l'ouverture de l'antenne parabolique (108).

7. Capteur radar de niveau de remplissage selon la revendication 5,
dans lequel le blindage (111, 112) comporte un évidement pour recevoir le système d'élément de réception (109).

8. Capteur radar de niveau de remplissage selon l'une des revendications 1 à 4,
dans lequel le blindage (111, 112) est réalisé de manière quadratique avec un évidement pour recevoir le système d'élément de réception (109).

9. Capteur radar de niveau de remplissage selon l'une des revendications 1 à 4,
dans lequel le blindage (111, 112) est réalisé de manière hexagonale avec un évidement pour recevoir le système d'élément de réception (109).

10. Capteur radar de niveau de remplissage selon l'une des revendications précédentes,
dans lequel le système d'antennes d'émission (103, 104) comporte un système d'élément rayonnant (104) agencé dans le même plan que le blindage (111, 112) et agencé dans un évidement du blindage.

11. Capteur radar de niveau de remplissage selon l'une des revendications précédentes, comportant en outre :
une carte à circuit imprimé (113) dont la face avant (114) dirigée vers le matériau de remplissage comporte le système d'élément rayonnant (104) du système d'antennes d'émission (103, 104), et dont la face arrière (115) comporte le système d'élément de réception (109) du système d'antennes de réception (108, 109).

12. Capteur radar de niveau de remplissage selon l'une des revendications précédentes,
dans lequel le blindage (111, 112) est réalisé de manière modulairement extensible ou échangeable, et
dans lequel le blindage (111, 112) est conçu pour être monté de manière réversible sur le capteur radar de niveau de remplissage.

13. Conteneur (102) pourvu d'un couvercle (101), sur lequel est monté un capteur radar de niveau de remplissage selon l'une des revendications 1 à 12.
